# EUROPEAN PATENT SPECIFICATION

(11) **EP 4 086 145 B1**
(45) Date of publication and mention of the grant of the patent: **25.06.2025**
(21) Application number: 21305579.1
(22) Date of filing: 05.05.2021
(51) Int. Cl.: B62D 35/00, B62D 37/02

(54) **A VEHICLE EXTERIOR AIR GUIDING DEVICE AND METHOD FOR ASSEMBLING SUCH AN EXTERIOR AIR GUIDING DEVICE**
FAHRZEUGAUSSENLUFTFÜHRUNGSVORRICHTUNG UND VERFAHREN ZUM ZUSAMMENBAU EINER SOLCHEN AUSSENLUFTFÜHRUNGSVORRICHTUNG
DISPOSITIF DE GUIDAGE D'AIR EXTÉRIEUR POUR VÉHICULE ET PROCÉDÉ D'ASSEMBLAGE D'UN TEL DISPOSITIF DE GUIDAGE D'AIR EXTÉRIEUR

(43) Date of publication of application: 09.11.2022
(73) Proprietor: Flex-N-Gate France, 25405 Audincourt (FR); Renault s.a.s, 92100 Boulogne Billancourt (FR)
(72) Inventor: GUYON, Cyrille, 25600 NOMMAY (FR); PERUCCA, Steven Robert, CLINTON TOWNSHIP, 48038 (US); HUNG, Joaquin, MARKHAM, L6C2Y9 (CA); MARTINI, Paul, TECUMSEH, ON N8N 4X (CA); PIN, Michael, 78990 ELANCOURT (FR)
(74) Representative: Lavoix

(56) References cited:
- WO-A1-2017/052691
- WO-A1-2019/246578
- US-A1- 2018 134 332

## Description

The present invention relates to a vehicle exterior air guiding device intended to be installed on a motor vehicle comprising :
- a fixed part intended to be attached to said motor vehicle,
- a movable part movably mounted on the fixed part,
- at least one connecting mechanism allowing a movement of the movable part relative to the fixed part between a stowed position and a deployed position, and
- for each connecting mechanism, an assembling device for connecting the connecting mechanism and the movable part, the assembling device comprising a link bar extending along a bar axis, the link bar being inserted in at least one opening defined in the movable part and in at least one opening defined in the connecting mechanism.

It is well-known to install an exterior air guiding device on a motor vehicle intended to guide the flow of air around the guiding device in order to improve the aerodynamic performance of the motor vehicle and thus increase fuel efficiency, as well as to improve vehicle dynamics.

Such an exterior air guiding device is for example a spoiler mounted on the rear part of the motor vehicle.

In order to modulate the air flow around the vehicle, it is known to install a movable air guiding device mobile between a stowed position and a deployed position. The air guiding device is for example placed in the deployed position when the vehicle circulates at an important speed and in the stowed position when the speed is reduced. US 2018/134332 A1 describes an example of a variable spoiler of a rear bumper for a vehicle.

However, a movable air guiding device arrangement is often complex, requires many parts, which makes it cumbersome and expensive.

Indeed, the fastening systems used to assemble such a movable guiding system are often made of several intermediate parts in order to ensure a robust assembly. Such a system is thus complex to assemble, especially in a factory.

Furthermore, such fastening systems are often easy to access when the air guiding device is mounted, which makes it easy to vandalize, for example, when the vehicle is parked outside.

One of the aims of the invention is to provide a mobile exterior air guiding device easy to mount in a robust way on a motor vehicle while being difficult to remove once mounted on the motor vehicle.

To this end, the invention proposes an air guiding device of the afore-mentioned type, wherein the assembling device comprises one fastening element extending along a fastening axis and locking the link bar in position, the bar axis and the fastening axis extending in different directions.

The assembling device composed of a link bar locked by one fastening element makes the assembly of the connecting mechanism on the movable part very easy simply by putting the link bar in place and then lock it. The fact that the bar axis and the fastening axis are distinct and extend in different directions improves the robustness of the assembly.

According to other embodiments, the exterior air guiding device comprises one or several following features, taken individually or in any technically feasible combination:
- The bar axis is substantially parallel to a transverse axis, said transverse axis defining a rotation axis and/or a translation axis of the movable part relative to the fixed part.
- The bar axis and the fastening axis are substantially perpendicular.
- The fastening element is a screw.
- The link bar is inserted in two openings defined in the movable part and in one opening defined in the connecting mechanism, the three openings being aligned along the bar axis and the opening defined in the connecting mechanism being located between the two openings defined in the movable part.
- The movable part comprises, for each connecting mechanism, two distinct protruding housings comprising each one of the two openings of the movable part for the passage of the link bar, the two housings defining between them a cavity to receive a part of the connecting mechanism in which the opening for the passage of link bar is defined.
- The link bar comprises a fastening head, said fastening head being fastened to the movable part through the fastening element.
- A threaded hole is defined in the fastening head, the screw being screwed into said threaded hole of the fastening head of the link bar.
- The exterior air guiding device comprises a sealing system.

The invention further relates to a method for assembling such an exterior air guiding device on a motor vehicle, the method comprising at least the following steps, for each connecting mechanism:
- place the link bar close to one opening defined in the movable part;
- place the movable part on the connecting mechanism;
- push the link bar along the bar axis, so that the link bar passes through the openings; and
- lock the link bar in position by means of the fastening element extending along the fastening axis, which extends in a different direction than the bar axis.

Other aspects and advantages of the invention will be better understood on reading the following description given solely by way of non-limiting example and with reference to the appended drawings, in which:
- Figure 1 is a schematic view of a motor vehicle comprising an exterior air guiding device according to the invention and being in the stowed position;
- Figure 2 is a schematic view of the motor vehicle of Figure 1, wherein the exterior air guiding is in the deployed position;
- Figure 3 is a schematic view of the exterior air guiding device of Figure 1;
- Figure 4 is a schematic perspective view of the assembling device according to the invention; and
- Figure 5 is a schematic side view of the assembling device of Figure 4.

In the description, the terms "lower", "upper", "transverse", "front", "rear" are defined in the usual directions of an assembled vehicle, these terms referring, if applicable, to the position of the air guiding device when it is assembled on the vehicle. The transverse direction refers to a direction that extends substantially perpendicular to the movement direction of the vehicle. The term "inner" refers to what faces the body of the vehicle and the term "outer" to what faces the outside of the vehicle when the air guiding device is assembled on the vehicle.

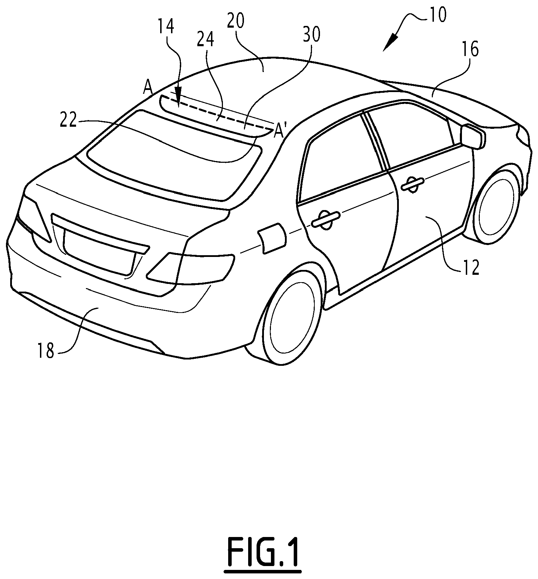

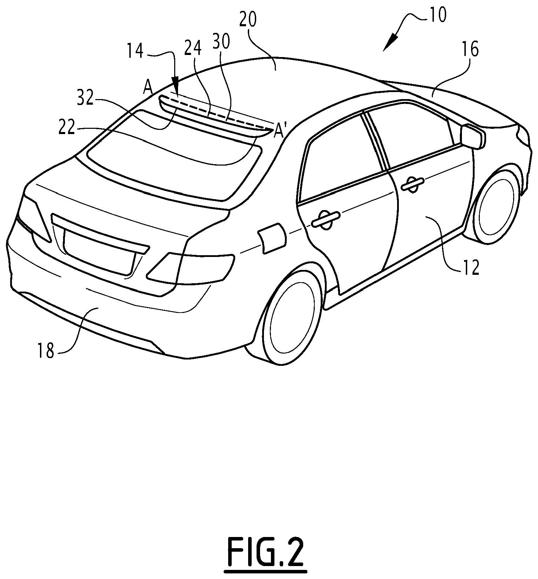

Figure 1 and 2 shows a motor vehicle 10 comprising a body 12 and an exterior air guiding device 14.

The motor vehicle 10 is for example a car, a bus, a van or a truck.

The body 12 of the motor vehicle 10 delimits an exterior space and an interior space intended notably for receiving passengers.

The body 12 of the motor vehicle 10 comprises a front part 16, a rear part 18 and a roof 20 extending between the front part 16 and the rear part 18.

The air guiding device 14 is installed on the exterior space and for example on the rear part 18 of the body 12.

For example, as shown in Figures 1 and 2, the air guiding device 14 is a spoiler installed between the vehicle roof 20 and the rear windshield.

Alternatively, the air guiding device 14 is, for example, a spoiler installed on the trunk of the vehicle, or a rear diffuser installed under the rear part 18 of the body 12.

In another variant, the air guiding device 14 is a spoiler installed on the front part 16 of the body 12.

The exterior air guiding device 14 comprises a fixed part 22, a movable part 24 mounted on the fixed part 22, at least one connecting mechanism 26 allowing a movement of the movable part 24 relative to the fixed part 22 and for each connecting mechanism 26, an assembling device 28 for connecting the connecting mechanism 26 to the movable part 24.

The fixed part 22 is attached to the body 12 of the motor vehicle 10.

More specifically, the fixed part 22 is fastened directly to the rear part 18 of the body 12 or, as shown in Figures 1 and 2 is part of the body 12.

The movable part 24 is movably mounted on the fixed part 22.

The movable part 24 is mounted for example in a rotating manner about a transverse axis A-A' relative to the fixed part 22 between a stowed position and a deployed position, as illustrated in figures 1 and 2. In this case, the connecting mechanism 26 is formed by a hinge connecting the movable part 24 to the fixed part 22.

The rotation angle of the movable part 24 between the stowed position and the deployed position is for example comprised between 10° and 90°.

As an alternative, the movable part 24 is mounted in translation along the transverse axis A-A' relative to the fixed part 22 between the stowed position and the deployed position. In this case, the connecting mechanism 26 is for example formed by a rail allowing the movable part 24 to slide relative to the fixed part 22.

In another alternative, the movement of the movable part 24 relative to the fixed part 22 between the stowed position and the deployed position is a combination of a translation along the transverse axis A-A' and a rotation with the transverse axis A-A' as rotation axis.

The transverse axis A-A' defines thus a rotation axis and/or a translation axis of the movable part 24 relative to the fixed part 22.

The movable part 24 comprises an air guiding face 30 and an opposite face 32 that is substantially opposite to the air guiding face 30.

When the movable part 24 is in the stowed position, shown in figure 1, the air guiding face 30 guides the flow of air following the curves of the rear part 18 of the body 12.

Advantageously and in reference to figure 1, when the movable part 14 is in the stowed position, the air guiding face 30 extends substantially in the continuation of the fixed part 22. "In the continuation" means that the air guiding face 30 and the fixed part 22 together form a substantially continuous and regular air-guiding surface.

When the movable part 24 occupies the stowed position, the opposite face 32 is in contact with the fixed part 22.

The movable part 24 occupies the stowed position when the speed of the motor vehicle is low, for example less than 50 km/h.

When the movable part 24 is in the deployed position, shown in figure 2, the air guiding face 30 guides the flow of air away from the rear part 18 of the body 12.

Advantageously and in reference to figure 2, when the movable part 14 is in the deployed position, the opposite face 32 is not in contact with the fixed part 22. The air guiding face 30 is inclined relative to the fixed part 22.

The movable part 24 occupies the deployed position when the speed of the motor vehicle is important, for example above 60 km/h.

The movable part 24 moves from the stowed position toward the deployed position when the speed of the motor vehicle increases, for example exceeds 60 km/h, and the movable part 24 moves from the deployed position toward the stowed position when the speed of the motor vehicle decreases for example falls below 40 km/h.

The air guiding face 30 has for example a substantially flat shape. In a variant, it has a convex or concave shape.

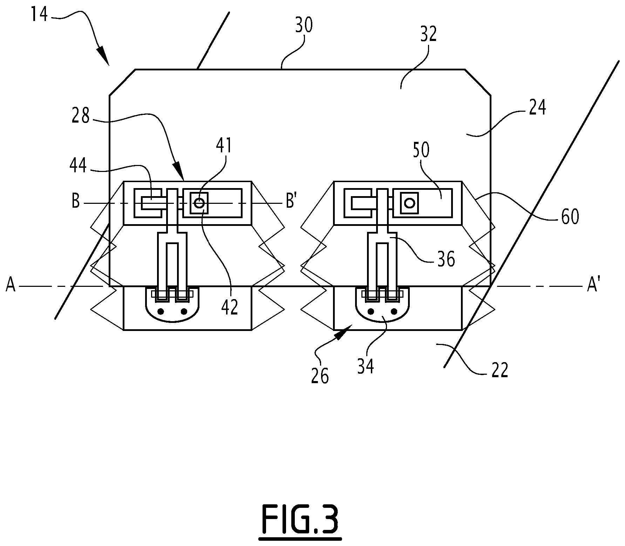

At least one connecting mechanism 26 mounted on the fixed part 22 and on the movable part 24, for example two connecting mechanisms 26 as shown on Figure 3, allows such a movement of the movable part 24 relative to the fixed part 22.

In the case where the connecting mechanism(s) 26 is(are) or comprise(s) a hinge,-each connecting mechanism 26 comprises a first portion 34 fastened on the fixed part 22, a second portion 36 mounted on the movable part 24 and an articulating mean 38.

The articulating mean 38 comprises for example, in a well-known manner, knuckles and a pin allowing the rotation of the second portion 36 relative to the first portion 34, and thus the rotation of the movable part 24 relative to the fixed part 22 along the transverse axis A-A'.

In the case where the connecting mechanism(s) 26 is(are) or comprise(s) a rail, the articulating mean 38 defines a slide rail allowing the translation of the second portion 36 relative to the first portion 34 and thus the translation of the movable part 24 relative to the fixed part 22 along the transverse axis A-A'.

The second portion 36 of each connecting mechanism 26 is mounted on the movable part 24 by means of an assembling device 28.

The assembling device 28 comprises a link bar 40 and one fastening element 41.

The link bar 40 extends along a bar axis B-B'.

Advantageously, the bar axis B-B' is substantially parallel to the transverse axis A-A'.

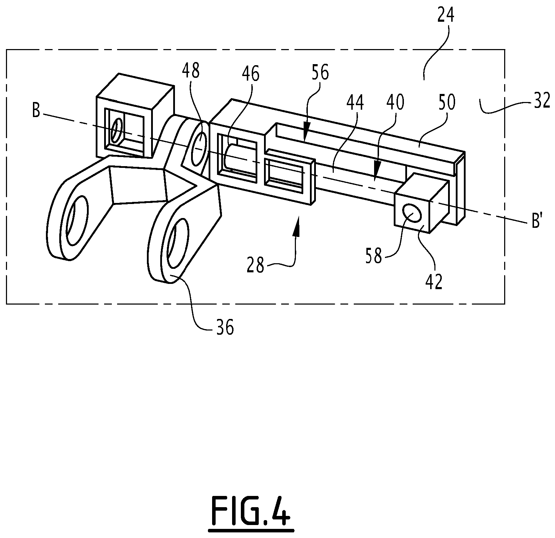

As shown on Figure 4, the link bar 40 comprises advantageously a fastening head 42 and a rod 44 extending from the fastening head 42 along the bar axis B-B'.

The fastening head 42 is located at one end of the rod 44.

The rod 44 for example has a circular cross-section with a diameter substantially comprised between 2 mm and 12 mm. The rod 44 has for example a length, measured along the bar axis B-B', substantially comprised between 20 mm and 100 mm.

The fastening head 42 is, for example, substantially rectangular in shape with lateral dimensions greater than the diameter of the rod 44 such that the fastening head 42 protrudes radially from the rod 44.

The link bar 40 is for example made of metal.

When the assembling device 28 is mounted, the link bar 40 is inserted in at least one opening 46 defined in the movable part 24 and in at least one opening 48 defined in the connecting mechanism 26.

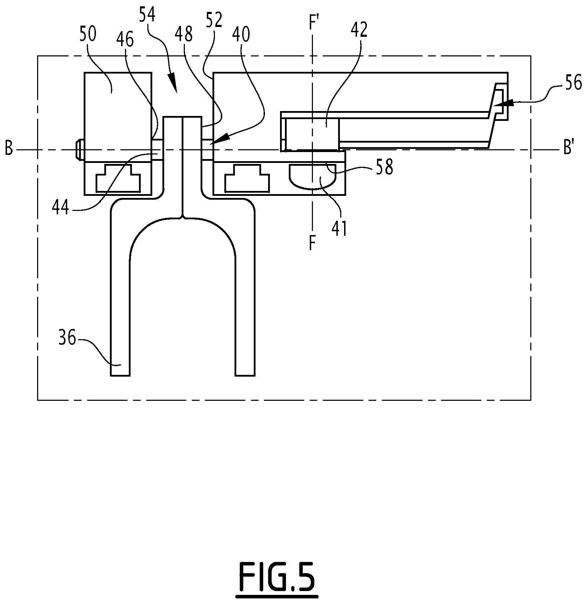

In the embodiment illustrated on Figures 4 and 5, the link bar 40 is inserted into two openings 46 defined in the movable part 24 and into one opening 48 defined in the connecting mechanism 26, and more specifically defined in the second portion 36 of the connecting mechanism 26.

In another embodiment not illustrated, the link bar 40 is inserted into two openings defined in the connecting mechanism 26 and into one opening defined in the movable part.

The insertion of the link bar 40 into two openings defined either in the movable part 24 or in the connecting mechanism 26 allows a better positioning and alignment of the link bar 40 along the bar axis B-B' than with only one opening and thus avoids torsion.

As shown on Figure 5, the three openings 46, 48 are aligned along the bar axis B-B' and the opening 48 defined in the connecting mechanism 26 is located between the two openings 46 defined in the movable part 24.More specifically, when the assembling device 28 is mounted as shown on Figure 5, the rod 44 is inserted in the three openings 46, 48 and the fastening head 42 is located close to one of the openings defined in the movable part 24.

Advantageously, two protruding housings 50 are defined on the movable part 24, and more specifically on the opposite face 32 of the movable part 24.

Each one of the housings 50 defines a space to receive a part of the link bar 40.

Each one of the housings 50 comprises one of the two openings 46 for the passage of the link bar 40.

Advantageously, as shown in Figures 4 and 5, a rail 56 is defined at least in one of the housings 50 in order to guide the insertion of the link bar 40 in the openings 46, 48.

Such a geometry of the housing 50 allows a simplified positioning of the link bar 40.

Advantageously, such a geometry of the housing 50, and more specifically the rail 56, makes it possible to hold the link bar 40 inside said housing 50, even before the definitive fastening of the link bar 40.

The movable part 24 has for example the shape of a fork with two branches, each branches defining a housing 50.

Each opening 46 is preferably defined on a lateral side 52 of one of the housing 50.

The two housings 50 define between them a cavity 54, corresponding for example to the space between the two branches of the fork. More specifically, the cavity 54 is defined as the space between two lateral sides 52 in which the openings 46 are defined. Said two lateral sides 52 are facing each other.

When the assembling device 28 is mounted, the part of the connecting mechanism 26, and more specifically of the second portion 36, in which the opening 48 is defined, is received into said cavity 54, so that the three openings 46, 48 are aligned and the link bar 40, and more specifically the rod 48, extends in the openings 46, 48 along the bar axis B-B'.

In such an embodiment, when the assembling device 28 is mounted as shown on Figure 5, the fastening head 42 lies preferably against one of the lateral sides 52 in which an opening 46 is defined.

The fastening element 41 locks the link bar 40 in position, such that all rotation and translation movements of the link bar 40 relative to bar axis B-B' are blocked.

The fastening element 41 extends along a fastening axis F-F'.

As shown in Figure 5, the bar axis B-B' and the fastening axis F-F' are distinct from each other, meaning that they extend in different directions. In other words, the bar axis and the fastening axis are not parallel to each other. According to a particular embodiment, the bar axis and the fastening axis are substantially perpendicular.

The fastening element 41 fastens the link bar 40, and more specifically the fastening head 42, to the movable part 24, and more specifically to one of the housing 50.

The fastening element 41 is preferably a screw. In variant, the fastening element 41 is a bolt.

Preferably, a threaded hole 58 is defined in the fastening head 42.

In order to lock the link bar 40 in position, the screw 41 is screwed into said threaded hole 58.

In the embodiment shown in Figure 5, when the fastening element 41 locks the link bar 40 in position, the rotation between the movable part 24 and the connecting mechanism 26 is blocked.

In a variant not shown, the rotation between the movable part 24 and the connecting mechanism 26 is allowed.

Preferably, the air guiding device 14 device further comprises a sealing system 60.

The sealing system 60 is for example a rubber boot fixed to the movable part 24 and to the fixed part 22.

The assembling device 28 and the connecting mechanism 26 are advantageously located inside said sealing system 60.

Said sealing system 60 is flexible, such that so that it is able to adapt its shape according to the position of the movable part 24.

A method for assembling such an exterior air guiding device 14 will now be described.

First, the fixed part 22 of the exterior air guiding device 14 is fastened to the body 12 on the exterior side, and for example to the rear part 18 of the body 12.

For example, as shown on Figures 1 and 2, the fixed part 22 is fastened between the roof 20 and the rear windshield.

Secondly, at least one connecting mechanism 26, and more specifically the first portion 34 of each connecting mechanism 26, is fastened on the fixed part 22.

The fastening of the first portion 34 on the fixed part 22 is well known and will not be described in more detail below.

Then, for each connecting mechanism 26 installed, an assembling device 28 comprising a link bar 40 and a fastening element 41 is provided.

The link bar 40 is placed close to one of the openings 46 defined in the movable part 24, and more particularly on the opposite face 32.

As shown on Figure 4, the link bar 40 is preferably inserted into the rail 56 defining in one of the housing 50.

Afterwards, the movable part 24 is placed on the connecting mechanism 26.

More specifically, in the preferred embodiment shown on Figure 4, the part of the connecting mechanism 26, and more specifically of the second portion 36, in which the opening 48 is defined, is received into the cavity 54 defined between the two housings 50.

After this step, as shown on Figure 4, the three openings 46, 48 are aligned along the bar axis B-B'.

The link bar 40 is then pushed along the bar axis B-B', so that the link bar 40 passes through the openings 46, 48, and more specifically through the three openings 46, 48.

After this step, as shown on Figure 5, the link bar 40 is in its final position.

The link bar 40 extends preferably along the bar axis B-B' parallel to the transverse axis A-A. The transverse axis A-A' defines the rotation axis and/or the translation axis of the movable part 24 relative to the fixed part 22.

In the preferred embodiment shown on Figure 5, the fastening head 42 of the link bar 40 lies against one of the lateral sides 52 in which an opening 46 is defined.

Next, the link bar 40 is locked in this position by means of the fastening element 41.

The fastening element 41, preferably a screw, extends along the fastening axis F-F' distinct from the bar axis B-B', and more specifically perpendicular to said bar axis B-B'.

In the preferred embodiment shown on Figure 5, the fastening element 41 is a screw screwed into a threaded hole 58 defined in the fastening head 42 of the link bar 40.

Advantageously, a sealing system 60 is then installed and fixed.

For example, the sealing system 60 constituting of a rubber boot is first clipped to the movable part 24, more specifically into a trail defined in the movable part 24, for a fixation in a form-fitting manner.

Then, the rubber boot is fastened to the fixed part 22, advantageously thanks to invisible fixing. In other words, the fixing of the rubber boot to the fixed part 22 is not visible from the outside of the rubber boot.

Such an exterior air guiding device 14 is easy to assemble, notably thanks to the assembling device 28 composed only of a link bar 40 and one screw 41. The assembly cost are therefore reduced.

Furthermore, such an assembling device 28 ensures a robust and reliable assembly of the movable part 24 on the connecting mechanism 26.

Moreover, such an assembling device 28 is space-saving while ensuring good resistance to effort, notably thanks to the fastening element 41 extending along a fastening axis F-F' extending in a different direction than the transverse axis A-A'. This resistance is even more increased when the fastening axis is perpendicular to the transverse axis A-A'.

Once installed, the assembling device 28 is located on the opposite face 32, which is in contact with the fixed part 22 when the movable part 24 is in its stowed position. When the motor vehicle 10 is parked, the movable part 24 is in its stowed position, the assembling device 28 and in particular, the fastening element 41 is thus difficult to access, which makes it difficult to remove and thus protects the device from vandalism.

## Claims

1. Vehicle exterior air guiding device intended to be installed on a motor vehicle (10) comprising :
- a fixed part (22) intended to be attached to said motor vehicle (10),
- a movable part (24) movably mounted on the fixed part (22),
- at least one connecting mechanism (26) allowing a movement of the movable part (24) relative to the fixed part (22) between a stowed position and a deployed position, and
- for each connecting mechanism (26), an assembling device (28) for connecting the connecting mechanism (26) and the movable part (24), the assembling device (28) comprising a link bar (40) extending along a bar axis (B-B'), the link bar (40) being inserted in at least one opening (46) defined in the movable part (24) and in at least one opening (48) defined in the connecting mechanism (26),
**characterized in that** the assembling device (28) comprises one fastening element (41) extending along a fastening axis (F-F') and locking the link bar (40) in position, the bar axis (B-B') and the fastening axis (F-F') extending in different directions.

2. Exterior air guiding device according to claim 1, wherein the bar axis (B-B') is substantially parallel to a transverse axis (A-A', said transverse axis (A-A') defining a rotation axis and/or a translation axis of the movable part (24) relative to the fixed part (22).

3. Exterior air guiding device according to claim 1 or 2, wherein the bar axis (B-B') and the fastening axis (F-F') are substantially perpendicular.

4. Exterior air guiding device according to any one of claims 1 to 3, wherein the fastening element (41) is a screw.

5. Exterior air guiding device according to any one of claims 1 to 4, wherein the link bar (40) is inserted in two openings (46) defined in the movable part (24) and in one opening (48) defined in the connecting mechanism (26), the three openings (46, 48) being aligned along the bar axis (B-B') and the opening (48) defined in the connecting mechanism (26) being located between the two openings (46) defined in the movable part (24).

6. Exterior air guiding device according to claim 5, wherein the movable part (24) comprises, for each connecting mechanism (26), two distinct protruding housings (50) comprising each one of the two openings (46) of the movable part (24) for the passage of the link bar (40), the two housings (50) defining between them a cavity (54) to receive a part of the connecting mechanism ( 26) in which the opening (48) for the passage of link bar (40) is defined.

7. Exterior air guiding device according to any one of claims 1 to 6, wherein the link bar (40) comprises a fastening head (42), said fastening head (42) being fastened to the movable part (24) through the fastening element (41).

8. Exterior air guiding device according to claims 4 and 7, wherein a threaded hole (58) is defined in the fastening head (42), the screw (41) being screwed into said threaded hole (58) of the fastening head (42) of the link bar (40).

9. Exterior air guiding device according to any one of claims 1 to 8 comprising a sealing system (60).

10. A method for assembling a exterior air guiding device according to any one of claims 1 to 9 on a motor vehicle, the method comprising at least the following steps, for each connecting mechanism (26):
- place the link bar (40) close to one opening (46) defined in the movable part (24);
- place the movable part (24) on the connecting mechanism (26);
- push the link bar (40) along the bar axis (B-B'), so that the link bar (40) passes through the openings (46, 48); and
- lock the link bar (40) in position by means of the fastening element (41) extending along the fastening axis (F'F'), which extends in a different direction than the bar axis (B-B').

## Patentansprüche

1. Fahrzeugaußenluft-Leitvorrichtung, die zum Einbau in ein Kraftfahrzeug (10) bestimmt ist, umfassend:
- einen feststehenden Teil (22), das dazu bestimmt ist, an dem Kraftfahrzeug (10) befestigt zu werden,
- einen beweglichen Teil (24), der beweglich an dem festen Teil (22) befestigt ist,
- mindestens einen Verbindungsmechanismus (26), der eine Bewegung des beweglichen Teils (24) relativ zum feststehenden Teil (22) zwischen einer Verstauposition und einer Einsatzposition ermöglicht, und,
- für jeden Verbindungsmechanismus (26), eine Montagevorrichtung (28) zum Verbinden des Verbindungsmechanismus (26) und des beweglichen Teils (24), wobei die Montagevorrichtung (28) eine Verbindungsstange (40) umfasst, die sich entlang einer Stangenachse (B-B') erstreckt, die Verbindungsstange (40) in mindestens eine in dem beweglichen Teil (24) definierte Öffnung (46) und in mindestens eine in dem Verbindungsmechanismus (26) definierte Öffnung (48) eingesetzt ist,
**dadurch gekennzeichnet, dass** die Montagevorrichtung (28) ein Befestigungselement (41) umfasst, das sich entlang einer Befestigungsachse (F-F') erstreckt und die Verbindungsstange (40) in ihrer Position arretiert, wobei die Stangenachse (B-B') und die Befestigungsachse (F-F') in unterschiedliche Richtungen verlaufen.

2. Außenluft-Leitvorrichtung nach Anspruch 1, **dadurch gekennzeichnet, dass** die Stangenachse (B-B') im Wesentlichen parallel zu einer Querachse (A-A' verläuft, wobei die Querachse (A-A') eine Rotationsachse und/oder eine Translationsachse des beweglichen Teils (24) relativ zum feststehenden Teil (22) definiert.

3. Außenluft-Leitvorrichtung nach Anspruch 1 oder 2, wobei die Stangenachse (B-B') und die Befestigungsachse (F-F') im Wesentlichen senkrecht zueinander stehen.

4. Außenluft-Leitvorrichtung nach einem der Ansprüche 1 bis 3, wobei das Befestigungselement (41) eine Schraube ist.

5. Außenluft-Leitvorrichtung nach einem der Ansprüche 1 bis 4, **dadurch gekennzeichnet, dass** die Verbindungsstange (40) in zwei im beweglichen Teil (24) ausgebildete Öffnungen (46) und in eine im Verbindungsmechanismus (26) ausgebildete Öffnung (48) eingesetzt ist, wobei die drei Öffnungen (46, 48) entlang der Stangenachse (B-B') ausgerichtet sind und die im Verbindungsmechanismus (26) ausgebildete Öffnung (48) zwischen den beiden im beweglichen Teil (24) ausgebildeten Öffnungen (46) angeordnet ist.

6. Außenluft-Leitvorrichtung nach Anspruch 5, **dadurch gekennzeichnet, dass** der bewegliche Teil (24) für jeden Verbindungsmechanismus (26) zwei getrennte, vorstehende Gehäuse (50) aufweist, die jeweils eine der beiden Öffnungen (46) des beweglichen Teils (24) für den Durchgang der Verbindungsstange (40) umfassen, wobei die beiden Gehäuse (50) zwischen sich einen Hohlraum (54) zur Aufnahme eines Teils des Verbindungsmechanismus (26) definieren, in dem die Öffnung (48) für den Durchgang der Verbindungsstange (40) definiert ist.

7. Außenluft-Leitvorrichtung nach einem der Ansprüche 1 bis 6, wobei die Verbindungsstange (40) einen Befestigungskopf (42) aufweist und dieser Befestigungskopf (42) über das Befestigungselement (41) an dem beweglichen Teil (24) befestigt ist.

8. Außenluft-Leitvorrichtung nach einem der Ansprüche 4 und 7, wobei im Befestigungskopf (42) eine Gewindebohrung (58) ausgebildet ist und die Schraube (41) in diese Gewindebohrung (58) des Befestigungskopfes (42) der Verbindungsstange (40) eingeschraubt wird.

9. Außenluft-Leitvorrichtung nach einem der Ansprüche 1 bis 8, ferner umfassend ein Abdichtungssystem (60).

10. Verfahren zum Montieren einer Außenluft-Leitvorrichtung nach einem der Ansprüche 1 bis 9 an einem Kraftfahrzeug, wobei das Verfahren für jeden Verbindungsmechanismus (26) mindestens die folgenden Schritte umfasst:
- Anbringen der Verbindungsstange (40) in der Nähe einer im beweglichen Teil (24) ausgebildeten Öffnung (46);
- Platzieren des beweglichen Teils (24) am Verbindungsmechanismus (26);
- Verschieben der Verbindungsstange (40) entlang der Stangenachse (B-B'), sodass die Verbindungsstange (40) durch die Öffnungen (46, 48) hindurchgeht; und
- Arretieren der Verbindungsstange (40) in ihrer Position mithilfe des Befestigungselements (41), das sich entlang der Befestigungsachse (F'F') erstreckt, die sich in einer anderen Richtung als die Stangenachse (B-B') erstreckt.

## Revendications

1. Dispositif de guidage d'air extérieur d'un véhicule destiné à être installé sur un véhicule automobile (10) comprenant :
- une partie fixe (22) destinée à être attachée audit véhicule automobile (10),
- une partie mobile (24) montée de manière mobile sur la partie fixe (22),
- au moins un mécanisme de connexion (26) permettant un mouvement de la partie mobile (24) par rapport à la partie fixe (22) entre une position rangée et une position déployée, et
- pour chaque mécanisme de connexion (26), un dispositif d'assemblage (28) pour connecter le mécanisme de connexion (26) et la partie mobile (24), le dispositif d'assemblage (28) comprenant une barre de liaison (40) s'étendant le long d'un axe de barre (B-B'), la barre de liaison (40) étant insérée dans au moins une ouverture (46) définie dans la partie mobile (24) et dans au moins une ouverture (48) définie dans le mécanisme de connexion (26),
**caractérisé en ce que** le dispositif d'assemblage (28) comprend un élément de fixation (41) s'étendant le long d'un axe de fixation (F-F') et bloquant la barre de liaison (40) en position, l'axe de la barre (B-B') et l'axe de fixation (F-F') s'étendant dans des directions différentes.

2. Dispositif de guidage d'air extérieur selon la revendication 1, dans lequel l'axe de la barre (B- B') est sensiblement parallèle à un axe transversal (A-A', ledit axe transversal (A-A') définissant un axe de rotation et/ou un axe de translation de la partie mobile (24) par rapport à la partie fixe (22).

3. Dispositif de guidage d'air extérieur selon la revendication 1 ou 2, dans lequel l'axe de la barre (B-B') et l'axe de fixation (F-F') sont sensiblement perpendiculaires.

4. Dispositif de guidage d'air extérieur selon l'une quelconque des revendications 1 à 3, dans lequel l'élément de fixation (41) est une vis.

5. Dispositif de guidage d'air extérieur selon l'une quelconque des revendications 1 à 4, dans lequel la barre de liaison (40) est insérée dans deux ouvertures (46) définies dans la partie mobile (24) et dans une ouverture (48) définie dans le mécanisme de connexion (26), les trois ouvertures (46, 48) étant alignées le long de l'axe de la barre (B-B') et l'ouverture (48) définie dans le mécanisme de connexion (26) étant située entre les deux ouvertures (46) définies dans la partie mobile (24).

6. Dispositif de guidage d'air extérieur selon la revendication 5, dans lequel la partie mobile (24) comprend, pour chaque mécanisme de connexion (26), deux logements distincts en saillie (50) comprenant chacune des deux ouvertures (46) de la partie mobile (24) pour le passage de la barre de liaison (40), les deux logements (50) définissant entre eux une cavité (54) pour recevoir une partie du mécanisme de connexion (26) dans lequel l'ouverture (48) pour le passage de la barre de liaison (40) est définie.

7. Dispositif de guidage d'air extérieur selon l'une quelconque des revendications 1 à 6, dans lequel la barre de liaison (40) comprend une tête de fixation (42), ladite tête de fixation (42) étant fixée à la partie mobile (24) par l'intermédiaire de l'élément de fixation (41).

8. Dispositif de guidage d'air extérieur selon les revendications 4 et 7, dans lequel un trou fileté (58) est défini dans la tête de fixation (42), la vis (41) étant vissée dans ledit trou fileté (58) de la tête de fixation (42) de la barre de liaison (40).

9. Dispositif de guidage d'air extérieur selon l'une quelconque des revendications 1 à 8, comprenant en outre un système d'étanchéité (60).

10. Procédé de montage d'un dispositif de guidage d'air extérieur selon l'une quelconque des revendications 1 à 9 sur un véhicule automobile, le procédé comprenant au moins les étapes suivantes, pour chaque mécanisme de connexion (26) :
- placer la barre de liaison (40) à proximité d'une ouverture (46) définie dans la partie mobile (24) ;
- placer la partie mobile (24) sur le mécanisme de connexion (26) ;
- pousser la barre de liaison (40) le long de l'axe de la barre (B-B'), de sorte que la barre de liaison (40) passe à travers les ouvertures (46, 48) ; et
- bloquer la barre de liaison (40) en position au moyen de l'élément de fixation (41) s'étendant le long de l'axe de fixation (F'F'), qui s'étend dans une direction différente de l'axe de la barre (B-B').
